(19) Europäisches Patentamt
European Patent Office
Office européen des brevets

(11) **EP 1 595 829 B1**

(12) **EUROPÄISCHE PATENTSCHRIFT**

(45) Veröffentlichungstag und Bekanntmachung des Hinweises auf die Patenterteilung:
**28.11.2007 Patentblatt 2007/48**

(51) Int Cl.:
*B65G 53/28* (2006.01)   *B65G 53/52* (2006.01)

(21) Anmeldenummer: **05010098.1**

(22) Anmeldetag: **10.05.2005**

(54) **Verwendung einer pneumatischen Fördervorrichtung zur Förderung von Glasfasern mit bestimmten Eigenschaften**

Use of a pneumatic conveyor device for conveying of glass fibers with specific characteristics

Utilisation d'un dispositif de convoyeur pneumatique pour convoyer des fibres de verre avec des caractéristiques spécifiques

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **15.05.2004 DE 102004024273**
**28.05.2004 DE 102004026119**

(43) Veröffentlichungstag der Anmeldung:
**16.11.2005 Patentblatt 2005/46**

(73) Patentinhaber: **LANXESS Deutschland GmbH**
**51369 Leverkusen (DE)**

(72) Erfinder:
• **van Mullekom, Robert, Hubertus, Dr.**
**9160 Lokeren (BE)**
• **Joachimi, Detlev, Dr.**
**47800 Krefeld (DE)**
• **Bienmüller, Matthias, Dr.**
**47803 Krefeld (DE)**
• **Grasshof, Herbert, Dipl.-Ing.**
**47443 Moers (DE)**
• **De Bock, Maarten, Dr.**
**9130 Kallo (BE)**

(56) Entgegenhaltungen:
**EP-A- 0 692 441**   **DE-A1- 10 127 427**

## Beschreibung

Die Erfindung betrifft die Verwendung einer pneumatischen Fördervorrichtung gemäß DE 101 27 427 A1 zur Förderung von Glasfasern die eine Schlichte-Extrahierbarkeit von maximal 85 % aufweisen.

Glasfasern für die Verstärkung von Kunststoffen werden üblicherweise in Form von Faserbündeln, den sogenannten Chopped Strands, verarbeitet. Die Faserbündel bestehen beispielsweise aus 2000 parallelen Einzelfasern (typischer Durchmesser der Einzelfasern 10 bis 14 µm) mit einer typischen Länge von 3 bis 4,5 mm. Die Glasfasern sind mit einer sogenannten Schlichte überzogen, wobei der Schlichtegehalt der verkaufsfertigen Chopped Strands in der Regel 0,3 bis 1,5 Gew.-% beträgt.

Die Aufgabe der Glasfaserschlichte besteht u.a. darin, den Verbund zwischen der Glasfaser und dem Matrixpolymer herzustellen. Als Schlichten werden in der Regel Zusammensetzungen aus einem polymeren Bindemittel (dem sogenannten Filmbildner), einem Haftvermittler, Gleitmitteln, Antistatika und weiteren Hilfsmitteln verwendet. Als Bindemittel verwendet man im Allgemeinen organische, wasserdispergierbare oder lösliche Polyvinylacetat-, Polyester-, Polyesterepoxid-, Polyurethan-, Polyacrylat- oder Polyolefinharze oder deren Mischungen. Die Schlichte wird in der Regel als wässrige Dispersion und/oder Lösung bei der Herstellung der Glasfasern aufgetragen. Anschließend werden die mit einer Schlichte versehenen Glasfasern getrocknet. Die Schlichtekomponenten werden generell so gewählt, dass eine Affinität zwischen der Polymermatrix und der Schlichte besteht und damit ein mechanischer Verbund zwischen Glasfaser und Polymermatrix hergestellt wird.

Darüber hinaus soll die Schlichte die Herstell- und Verarbeitbarkeit der Glasfasern gewährleisten. Die Schlichte hält die trockenen Einzelfasern in den Faserbündeln zusammen, damit sie bei Transport, Förderung und Verarbeitung nicht aufflusen, d.h. durch Auflösen des Faserverbundes ihre Konsistenz zu einer watteähnlichen Form verändern. Ein zu starkes Aufflusen der Glasfasern erhöht die Gefahr von Verstopfungen in den glasfaserverarbeitenden Anlagen (z.B. Extrudervorlage, Rohren, Trichtern, Förderbänder, Waagen) erheblich.

Aus dem Stand der Technik bekannte Fördertechniken zur absatzweisen Beschickung/Befüllung von Produktionsanlagen mit geschnittenen Glasfasern sind Aufzuganlagen und Flurförderfahrzeuge, wie Gabelstapler oder Krananlagen. Kontinuierliche Förderung kann z.B. über Becherwerke, Stetigförderer, Rüttel- bzw. Vibrationsrinnen oder Transportbänder erfolgen.

Nachteilig ist, dass diese Fördertechniken zum Teil sehr aufwändig sind und aufgrund ihrer Bauart und ihres Platzbedarfs nur schwer in bereits vorhandene Produktionsanlagen und deren Gebäudelogistik zu integrieren sind.

Ein Ausweg bietet der Einsatz von Anlagen zur pneumatischen Förderung von Schüttgütern, wie sie beispielsweise in EP 0 692 441 A1 beschrieben sind. Die in EP 0 692 441 A1 beschriebenen pneumatischen Förderanlagen arbeiten in sogenannten Saug-Druck-Zyklen, wobei im Saugzyklus die Anlage mit Schüttgut aus einem Aufgabebehälter teilbefüllt wird und im Druckzyklus das eingefüllte Material zum Zielort gefördert wird. Eine besondere Anordnung der Druckluftversorgung verhindert das Verstopfen solcher Anlagen.

In der Offenlegungsschrift DE 101 27 427 A1 wird eine Vorrichtung zu pneumatischen Förderung von feinteiligen Schüttgütern, insbesondere Glasfasern, beschrieben, die wenigstens einen Aufgabebehälter, ein pneumatisches Förderrohr mit einem ersten Abschnitt und einem zweiten Abschnitt, eine Saugfördereinrichtung für das Fördergas, die mit dem Ende des ersten Abschnitts des Förderrohrs verbunden ist, eine Druckfördereinrichtung für das Fördergas, eine Fördergasnebenleitung, mehrere Absperrarmaturen zwischen pneumatischem Förderrohr und Fördergasnebenleitung sowie eine Abgabestelle aufweist.

Die in DE 101 27 427 A1 beschriebene Vorrichtung hat im Gegensatz zu der in EP 0 692 441 A1 beschriebenen Vorrichtung nicht den Nachteil, dass in der Saug- bzw. Einfüllphase des Förderzyklus am Zielort auf die gesamte Vorrichtung Unterdruck erzeugt werden muss, sondern nur im ersten Abschnitt des Förderrohres. Ein weiterer Vorteil der in DE 101 27 427 A1 beschriebenen Vorrichtung sind das effizientere Betreiben der Förderanlage, weil die erste Phase (Einfüllen der Glasfasern in Abschnitt 1) und die dritte Phase des Förderzyklus (Fördern der Glasfasern in Abschnitt 2) gleichzeitig erfolgen kann. Ferner kann bei der aus DE 101 27 427 A1 bekannten Vorrichtung die Fördergeschwindigkeit besser kontrolliert werden.

Ein erheblicher Nachteil pneumatischer Glasfaserförderanlagen ist jedoch die hohe mechanische Beanspruchung, welcher die Glasfaserbündel ausgesetzt sind. Unter derart hohen mechanischen Belastungen hängt es im Wesentlichen von der Glasfaserschlichte ab, ob die Glasfasern eines Glasfaserbündels ausreichend gut zusammenhalten. Werden die Glasfasern eines Bündels aufgrund der Schlichte nur unzureichend zusammengehalten, nimmt das spezifische Volumen der geförderten Glasfasern während deren Förderung stark zu.

Eine starke Volumenzunahme deutet auf die Bildung von Flusen, die einerseits zur Verstopfung der Anlage führen können und andererseits die Weiterverarbeitung der Glasfasern erschweren. Folglich besteht die Gefahr, dass der mit der Vorrichtung zur pneumatischen Förderung gemäß DE 101 27 427 A1 angestrebte Vorteil durch erhebliche Nachteile bei der nachfolgenden Dosierung über Waagen, Fallrohre, Förderbänder und Extruder teilweise wieder aufgehoben wird.

Ein wichtiges Merkmal für das Entstehen von Flusen während der pneumatischen Förderung ist die Abnahme des spezifischen Gewichtes (Schüttdichte) der Glasfasern während des Fördervorganges. Dies bedeutet eine Zunahme des spezifischen Volumens. In der Regel sollte die Zunahme des spezifischen Volumens maximal 10 % betragen, um eine Weiterverarbeitung der Glasfasern nach der pneumatischen Förderung zu ermöglichen.

Überraschenderweise wurde nun gefunden, dass Glasfasern mit einer Schlichte-Extrahierbarkeit von maximal 85 %, vorzugsweise maximal 50 % und besonders bevorzugt maximal 40 %, besonders gut von einer Vorrichtung gemäß DE 101 27 427 A1 transportiert werden.

Unter Schlichte-Extrahierbarkeit von beschlichteten Glasfasern versteht man im Sinne der vorliegenden Erfindung die Gewichtsmenge an löslichen Bestandteilen, welche erhalten wird nach 24-stündigem Rühren von 1 Gewichtsteil beschlichteter Glasfasern in einem Lösungsmittelgemisch von 1,13 Gewichtsteilen Methanol und 21,3 Gewichtsteilen Chloroform bei Rückflusstemperatur (unter Normaldruck), ausgedrückt in Prozent von der gesamten auf den beschlichteten Glasfasern vorhandenen Gewichtsmenge an Schlichte vor der Extraktion.

Im Rahmen der vorliegenden Erfindung ist unter der pneumatischen Förderung von Glasfasern der Transport von Glasfasern mittels eines Gasstroms gemäß DE 101 27 427 A1 zu verstehen, wobei der Gasstrom (in der Regel ein Luftstrom) die Glasfasern mitreißt und somit befördert. Der Transport der Glasfasern erfolgt in der Regel in Rohren, Schläuchen o.dgl., in denen der Gasstrom durch den Aufbau einer Druckdifferenz erzeugt wird.

Die pneumatische Förderung von Glasfasern kann z.B. zur Befüllung und Entleerung von Transportbehältern für Glasfasern (z.B. Säcke, Oktabins, feststehende Silos, Silos auf LKWs), für den Transport innerhalb der Produktionsanlage für Glasfasern und für den Transport in Anlagen zur Einarbeitung der Glasfasern in Kunststoffe dienen.

Da die Glasfaserschlichte beim Förderverhalten der Glasfasern die entscheidende Rolle spielt, würde der Fachmann erwarten, dass innerhalb des üblichen Bereiches für den Schlichtegehalt geschnittener Glasfasern, d.h. 0,3 bis 1,5 Gew.%, ein höherer Schlichtegehalt zu einem verbesserten Förderverhalten führen müsste.

Überraschenderweise wurde jedoch gefunden, dass nicht der Schlichtegehalt von entscheidendem Einfluss auf das Förderverhalten ist, sondern dass sich mit sinkender Extrahierbarkeit der Schlichte in einem organischen Lösungsmittelgemisch das Förderverhalten verbessert.

Die Bestimmung der Schlichte-Extrahierbarkeit wird wie folgt durchgeführt: 1 Gewichtsteil Glasfasern wird mit 1,13 Gewichtsteilen Methanol und 21,3 Gewichtsteilen Chloroform 24 Stunden bei Rückflusstemperatur und Normaldruck gerührt. Anschließend wird die entstandene Suspension filtriert und das Filtrat bis zur Trockene eingeengt. Die Gewichtsmenge an Schlichte wird bestimmt durch Wägung des Trockenrückstands des Filtrats. Die gesamte auf den beschlichteten Glasfasern vorhandene Gewichtsmenge an Schlichte vor der Extraktion wird bestimmt mittels Veraschung nach ISO 3451. Die Schlichte-Extrahierbarkeit wird dann wie folgt berechnet:

Schlichte-Extrahierbarkeit = (Gewichtsmenge an extrahierter Schlichte pro Gewichtsteil Glasfasern) / (Gewichtsmenge an Schlichte vor der Extraktion pro Gewichtsteil Glasfasern) * 100 %

Geschnittene, beschlichtete Glasfasern für die Verstärkung von Kunststoffen werden von verschiedenen Herstellern im Markt angeboten. Beispielhaft seien genannt Vetrotex 983 der Fa. Vetrotex, Chambéry, Frankreich; PPG 3660 und PPG 3786 der Fa. Pittsburgh Plate Glass, Pittsburgh, Pennsylvania, USA; und CS 7928 der Fa. Bayer, Leverkusen, Deutschland.

Die Verwendung der Vorrichtung gemäß DE 101 27 427 A1 zur pneumatischen Förderung von Glasfasern mit einer Schlichte-Extrahierbarkeit von maximal 85 % hat den Vorteil, dass bei der Förderung das spezifische Volumen der Glasfasern um maximal 10% zunimmt. Einerseits bedeutet dies eine deutlich geringere Gefahr von Verstopfung der pneumatischen Förderanlage selbst, andererseits ist die Weiterverarbeitbarkeit der Glasfasern nach dem pneumatischen Förderschritt gesichert. Hierdurch ist der sichere und störungsfreie Betrieb der Anlage, gegeben.

Der Inhalt der DE 101 27 427 A1 wird von der vorliegenden Anmeldung voll umfasst.

DE 101 27 427 A1 beschreibt ein Verfahren zur pneumatischen Förderung von feinteiligen Schüttgütern unter Verwendung einer Vorrichtung, die wenigstens einen Aufgabebehälter, ein pneumatisches Förderrohr mit einem ersten Abschnitt und einen zweiten Abschnitt, eine Saugfördereinrichtung für das Fördergas, eine Fördergas-Nebenleitung, mehrere Absperrarmaturen zwischen dem pneumatischen Förderrohr und der Fördergas-Nebenleitung und eine Abgabestelle aufweist, dadurch gekennzeichnet, dass

a) man in einem ersten Schritt den ersten Abschnitt des Förderrohrs mit einer Aufgabeportion des Förderguts und Fördergas aus einem Aufgabebehälter mittels Saugförderung füllt,

b) man in einem zweiten Schritt das Fördergut aus dem ersten Abschnitt des Förderrohrs mittels Druckförderung in den zweiten Abschnitt des Förderrohrs mittels Druckförderung zur Abgabestelle fördert,

wobei die Fördergas-Nebenleitung endständig verschlossen oder verschließbar ist und die Druckförderung im zweiten Abschnitt des Förderrohrs mit einer konstanten Fördergasmenge für Förderrohr und Fördergas-Nebenleitung betrieben wird

In einer bevorzugten Ausführungsform beschreibt DE 101 27 427 A1 ein Verfahren wie zuvor beschrieben, bei dem zusätzlich in den zur Verstopfung neigenden Stellen des Förderrohrs mittels einer erhöhten Anzahl an Absperrarmaturen das Auftreten von Verstopfungen verhindert wird, indem die an diesen Stellen installierten Absperrarmaturen bei auftretendem Druckverlust öffnen und in den Bereich der einsetzenden Verstopfung Fördergas einleiten.

In einer besonders bevorzugten Ausführungsform beschreibt DE 101 27 427 A1 ein Verfahren wie zuvor beschrieben, das dadurch gekennzeichnet ist, dass man Absperrarmaturen verwendet, die zweistufig ausgebildet sind, wobei die erste Stufe, die an das Förderrohr angeschlossen ist, rückschlagsichernd ist und schließt, wenn der Druck in dem pneumatischen Förderrohr gleich groß oder größer als der Druck in der Fördergas-Nebenleitung ist.

Insbesondere bevorzugt beschreibt DE 101 27 427 A1 ein Verfahren, wie zuvor beschrieben das zusätzlich dadurch gekennzeichnet ist, dass man Absperrarmaturen verwendet, die zweistufig ausgebildet sind, wobei die zweite Stufe, die an die Fördergas-Nebenleitung angeschlossen ist, als Einlassventil mit Druckvoreinstellung für das Fördergas aus der Fördergas-Nebenleitung ausgebildet ist, wobei ein Druck voreingestellt wird, der größer ist als der Druck an der Anschlussstelle im Förderrohr bei verstopfungsfreiem Betrieb des Förderrohrs. Insbesondere besonders bevorzugt beschreibt DE 101 27 427 A1 ein Verfahren wie zuvor beschrieben, bei dem zusätzlich der Druck in der zweiten Stufe der Absperrarmaturen in Förderrichtung gesehen von Armatur zu Armatur ansteigend voreingestellt wird.

Nachfolgend wird die Vorrichtung gemäß DE 101 27 427 A1 zur pneumatischen Förderung von Glasfasern anhand der beigefügten Zeichnungen näher erläutert. Es zeigt

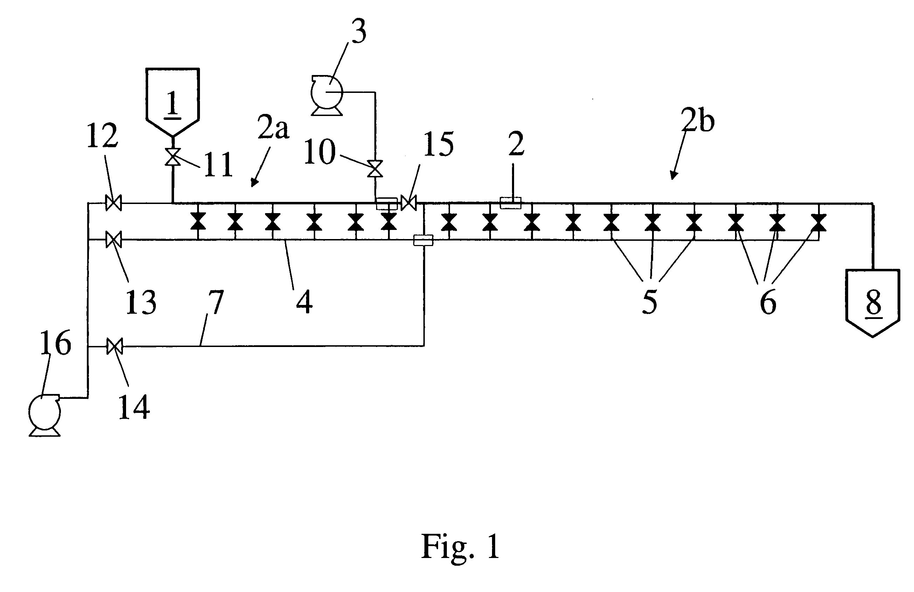

Figur 1     eine schematische Darstellung einer Ausführungsform einer Vorrichtung zur pneumatischen Förderung von Glasfasern gemäß DE 101 27 427 A.

Diese besteht wenigstens aus

(i) einem Förderrohr (2) mit einer Absperreinrichtung (15), welche das Förderrohr (2) in einen ersten Abschnitt (2a) zwischen einem ersten Ende des Förderrohrs (2) und der Absperreinrichtung (15) und in einen zweiten Abschnitt (2b) zwischen der Absperreinrichtung (15) und dem zweiten Ende des Förderrohrs (2) unterteilt,

(ii) einer Aufgabeeinrichtung (1), welche über eine Absperreinrichtung (11) mit einem ersten Ende eines Förderrohrs (2) verbunden ist,

(iii) einer Abgabeeinrichtung (8), welche mit dem zweiten Ende des Förderrohrs (2) verbunden ist,

(iv) einer dem Förderrohr (2) parallel geschalteten Fördergasnebenleitung (4), wobei die Fördergasnebenleitung (4) durch eine Vielzahl von Verbindungsleitungen (5) mit dem Förderrohr (2) verbunden ist,

(v) einer Saugfördereinrichtung (3), welche mit dem ersten Abschnitt (2a) mittels einer Absperreinrichtung (10) absperrbar verbunden ist,

(vi) einer Druckfördereinrichtung (16), welche im Bereich des ersten Endes des Förderrohrs (2) mittels einer Absperreinrichtung (12) und mit der Fördergasnebenleitung (4) mittels einer Absperreinrichtung (13) und mit dem ersten Ende des Abschnitt (2b) mittels einer Absperreinrichtung (14) absperrbar verbunden ist, und

(vii) Absperreinrichtungen (6) in den Verbindungsleitungen (5).

Wie in DE 101 27 427 A1 beschrieben, sind die Absperreinrichtungen (6) so ausgelegt, dass im Falle einsetzender oder auftretender Verstopfungen die Absperrarmaturen (6), die über kurze Rohrstücke (5) mit der Fördergasnebenleitung (4) verbunden sind, öffnen. Dadurch wird die Förderung der Aufgabeportion der geschnittenen Glasfasern hinter der einsetzenden oder auftretenden Verstopfung aufrecht erhalten und wird ggf. die Verstopfung aufgelockert.

Die in Figur 1 gezeigte Vorrichtung wird mit einem Verfahren betrieben, welches die folgenden Schritte umfasst (alle Hähne, d.h. Absperreinrichtungen, sind im Ausgangszustand geschlossen):

(a) Öffnen der Absperreinrichtungen (11), (10) und (13)

(b) Ansaugen von Glasfasern aus der Aufgabeeinrichtung (1) in den ersten Abschnitt (2a) mittels der Saugfördereinrichtung (3)

(c) Schließen der Absperreinrichtungen (11) und (10)

(d) Öffnen der Absperreinrichtungen (12) und (15)

(e) Fördern der in Schritt (b) in den ersten Abschnitt (2a) angesaugten Glasfasern in den zweiten Abschnitt (2b) mittels der Druckfördereinrichtung (16)

(f) Schließen der Absperreinrichtungen (12) und (15)

(g) Öffnen der Absperreinrichtung (14)

(h) Fördern der in Schritt (e) in den zweiten Abschnitt (2b) geförderten Glasfasern zum Aufgabebehälter (8) mittels Druckförderung (16).

(i) Schließen der Absperreinrichtung (14).

Das Verfahren in DE 101 27 427 A1 mit den Glasfasern mit der geforderten Schlichte-Extrahierbarkeit kann einfach oder mehrfach ausgeführt werden. Wird es mehrfach ausgeführt, schließt sich an Schritt (i) unmittelbar der Schritt (a), sodass die Schritte (a) bis (i) zyklisch durchlaufen werden. Vorzugweise werden die Schritte (g), (h) und (i) (Fördern in Abschnitt 2b) sowie (a), (b) und (c) (Füllen der Abschnitt 2a) gleichzeitig betrieben. Nach Schritt (f) folgen dann schon die Schritte (a), (b) und (c) während die Schritte (g), (h) und (i) ausgeführt werden.

Ein zusätzlicher Vorteil der pneumatischen Förderanlage gemäß DE 101 27 427 A1 ist die Möglichkeit diese mit Glasfasern zu beschicken, die über Bulk-Transport angeliefert werden. Unter Bulk-Transport versteht man die Bereitstellung von Glasfasern aus Schüttgutbehältern, wobei sich die Schüttgutbehälter dadurch auszeichnen, dass sie zum einen mobil sind (z.B. Transport durch LKW, Zug) und zum anderen eine Glasfasermenge von größer 1,5 Tonnen pro Behälter, bevorzugt größer als 7 Tonnen pro Behälter und besonders bevorzugt größer 15 Tonnen pro Behälter aufnehmen. Solche Schüttgutbehälter sind z.B. Schüttgutcontainer, die per LKW zur pneumatischen Förderanlage angeliefert und nach Entleerung wieder abtransportiert werden.

Bulk-Transport liefert insbesondere ökonomische und logistische Vorteile, die sich daraus ergeben, dass über den Bulk-Transport vergleichsweise große Mengen Glasfasern pro Einheit für pneumatische Förderanlagen bereit gestellt werden können. Die vergleichsweise große Bereitstellungsmenge an Glasfasern beim Bulk-Transport bietet weiterhin den Vorteil, dass auf Umfüllvorgänge der Glasfasern verzichtet werden kann, was eine geringere mechanische Beanspruchung der Glasfaserbündel bedeutet.

In einer bevorzugten Ausführungsform wird die Fördervorrichtung gemäß DE 101 27 427 A1 mit beschlichteten Glasfasern beschickt, die eine Schlichte-Extrahierbarkeit von maximal 85 % aufweisen und die vor der pneumatischen Förderung im Bulk transportiert werden. Der Bulk-Transport erfolgt insbesondere mittels Schüttgutbehälter von mindestens 1,5 t, bevorzugt mindestens 7 t, besonders bevorzugt mindestens 15 t.

## Beispiele

### Beispiel 1:

Für 4 verschiedene Typen von Glasfasern (Beispiele 1 (a)-(d)) wird mittels Veraschung nach ISO 3451 der Gehalt an Schlichte in Gew.% bestimmt. Die Ergebnisse sind der Tabelle 1, Spalte 3 zu entnehmen.

Daneben wird von diesen Glasfasern der mit Chloroform/Methanol extrahierbare Anteil an Schlichte auf folgende Weise bestimmt: In einem 4 1 Planschliffkolben mit Rückflusskühler und mechanischem Rührwerk werden zusammengegeben:

Glasfaser gemäß Tabelle 1: 175 g
Chloroform p.a.: 3725 g
Methanol p.a.: 197,5 g

Die Mischung wird 24 Stunden unter Rühren auf Rückfluss erhitzt. Anschließend werden die Glasfasern abfiltriert und das Filtrat eingeengt. Von den auf diese Weise erhaltenen Proben wurde das Gewicht in Gew.% vom gesamten Glasfasergewicht bestimmt und der %-Anteil an extrahierter Schlichte berechnet. Die Ergebnisse sind ebenfalls der Tabelle 1 (Spalten 4 und 5) zu entnehmen.

Tabelle 1

| Bsp. | Glasfaser | Gew.% Schlichte (ISO 3451) | Gew.% extrahierte Schlichte (CHCl$_3$ / Methanol) | Gew.% extrahierte Schlichte / Gew.% Schlichte [%] |
|---|---|---|---|---|
| 1a | PPG 3660 | 0,7 | 0,30 | 43 |
| 1b | Vetrotex 983 | 0,7 | 0,17 | 24 |
| 1c | PPG 3786 | 0,7 | 0,63 | 90 |
| 1d | Bayer CS7928 | 0,8 | 0,31 | 39 |

**Beispiel 2:**

Die in Beispiel 1 beschriebenen Glasfasern werden in praxisnahen Fördertests mit einer pneumatischen Förderanlage gemäß Figur 2 hinsichtlich des Förderverhaltens untersucht und beurteilt (Ausführungsbeispiele 2(a), (b) und (d); Vergleichsbeispiel 2(c)).

Die Gesamtlänge des pneumatischen Förderrohres zwischen Aufgabe- und Abgabestelle ist 120 m. Die zu fördernden, geschnittenen Glasfasern befinden sich im Aufgabebehälter 1. Aus diesem Aufgabebehälter 1 wird eine Probe der Glasfasern zur Bestimmung des Schüttvolumens vor der Förderung entnommen

Alle Ventile sind geschlossen. In einem ersten Schritt werden die Ventile 10 und 11 geöffnet und mittels des Gebläses 3 eine Portion von ca. 150 kg der geschnittenen Glasfasern innerhalb von 1 min aus dem Aufgabebehälter 1 in den ersten Abschnitt 2a des pneumatischen Förderrohrs 2 gesaugt. Die Ventile 10 und 11 werden geschlossen.

In einem zweiten Schritt werden die Ventile 12, 13 und 15 geöffnet und die im ersten Schritt in den ersten Abschnitt 2a des Förderrohrs 2 geförderte Portion an geschnittenen Glasfasern innerhalb von 20 sec durch das Fördergas in den zweiten Abschnitt 2b des Förderrohrs 2 mittels Druckförderung gefördert. Als Fördergas wird Druckluft auf Raumtemperatur verwendet. Der Druck für die Druckluft wird durch das Gebläse 16 aufgebaut. Die Ventile 12 und 15 werden geschlossen, Ventil 13 bleibt geöffnet, um die Fördergasnebenleitung 4 mit Druckluft zu versorgen. Im Falle einsetzender oder auftretender Verstopfungen öffnen die Absperrarmaturen 6, die über kurze Rohrstücke 5 mit der Fördergasnebenleitung 4 verbunden sind. Dadurch wird die Förderung der Aufgabeportion der geschnittenen Glasfasern hinter der einsetzenden oder auftretenden Verstopfung aufrecht erhalten.

In einem dritten Schritt wird Ventil 14 geöffnet. Die im zweiten Schritt in den zweiten Abschnitt 2b des Förderrohrs 2 geförderte Aufgabeportion an geschnittenen Glasfasern wird nun durch die Druckluft durch den zweiten Abschnitt 2b des Förderrohrs 2 bis zur Abgabestelle 8 gefördert. Die Förderung erfolgt innerhalb von 2 min. Die Druckluftmenge ist auf 200 m$^3$/h unter Normalbedingungen eingestellt, was einer Gasleerrohrgeschwindigkeit von ca. 5 m/s entspricht. Anschließend wird Ventil 14 geschlossen. An Abgabestelle 8 wird eine Probe der Glasfasern zur Bestimmung des Schüttvolumens nach der Förderung entnommen. Aus dem Schüttvolumen vor und nach der Förderung wird die Zunahme des Schüttvolumens berechnet. Die Ergebnisse sind Tabelle 2 zu entnehmen. In dieser Tabelle ist ebenfalls die Extrahierbarkeit der entsprechenden Glasfaserschlichten aus Tabelle 1 übernommen.

Aus den Ergebnisse geht hervor, dass Glasfasern mit einer Extrahierbarkeit der Schlichte größer als 85 % (Vergleichsbeispiel 2(c)) eine relativ große Volumenzunahme während der pneumatischen Förderung aufweisen, was ihre Weiterverarbeitung schwieriger macht. Bei Glasfasern mit einer geringeren Extrahierbarkeit der Schlichte, z.B. im Bereich von 40 bis 50 %, ist diese Volumenzunahme deutlich geringer. Eine noch geringere Volumenzunahme zeigen Glasfasern mit einer Extrahierbarkeit der Schlichte von weniger als 40 %. Schließlich zeigen Glasfasern mit einer Extrahierbarkeit der Schlichte von weniger als 25 % eine noch geringere Volumenzunahme und damit noch bessere Eigenschaften für die Weiterverarbeitung nach pneumatischer Förderung.

Tabelle 2

| Beispiel | Glasfaser | Schüttvolumen vor Förderung | Schüttvolumen nach Förderung | Volumenzunahme durch Förderung [%] | Gew.% extrahierte Schlichte / Gew.% Schlichte [%] |
|---|---|---|---|---|---|
| 2a | PPG 3660 | 1,59 | 1,73 | 8,8 | 43 |
| 2b | Vetrotex 983 | 1,85 | 1,84 | -0,5 | 24 |

(fortgesetzt)

| Beispiel | Glasfaser | Schüttvolumen vor Förderung | Schüttvolumen nach Förderung | Volumenzunahme durch Förderung [%] | Gew.% extrahierte Schlichte / Gew.% Schlichte [%] |
|---|---|---|---|---|---|
| 2c (Vergleichsbeispiel) | PPG 3786 | 1,54 | 2,01 | 31 | 90 |
| 2d | Bayer CS7928 | 1,79 | 1,88 | 5,2 | 39 |

**Patentansprüche**

1. Verwendung einer Vorrichtung zur pneumatischen Förderung, welche wenigstens besteht aus

(i) einem Förderrohr (2) mit einer Absperreinrichtung (15), welche das Förderrohr (2) in einen ersten Abschnitt (2a) zwischen einem ersten Ende des Förderrohrs (2) und der Absperreinrichtung (15) und in einen zweiten Abschnitt (2b) zwischen der Absperreinrichtung (15) und dem zweiten Ende des Förderrohrs (2) unterteilt,
(ii) einer Aufgabeeinrichtung (1), welche mittels der Absperreinrichtung (11) mit dem ersten Ende des Förderrohrs (2) verbunden ist,
(iii) einer Abgabeeinrichtung (8), welche mit dem zweiten Ende des Förderrohrs (2) verbunden ist,
(iv) einer Druckfördereinrichtung (16), welche mit dem ersten Ende des Förderrohrs (2) über eine Absperreinrichtung (12) verbunden ist,
(v) einer Saugfördereinrichtung (3), welche mit dem ersten Abschnitt (2a) des Förderrohrs (2) über eine Absperreinrichtung (10) verbunden ist,

zur Förderung von beschlichteten Glasfasern die eine Schlichte-Extrahierbarkeit von maximal 85 % aufweisen.

2. Verwendung nach Anspruch 1, **dadurch gekennzeichnet, dass** die Schlichte-Extrahierbarkeit maximal 50 % beträgt.

3. Verwendung gemäß Anspruch 1, **dadurch gekennzeichnet, dass** die beschlichteten Glasfasern vor der pneumatischen Förderung im Bulk transportiert werden.

4. Verwendung gemäß Anspruch 3, **dadurch gekennzeichnet, dass** der Bulk-Transport mittels Schüttgutbehälter von mindestens 1,5 t erfolgt.

**Claims**

1. Use of an apparatus for pneumatic conveyance, which comprises at least

(i) a conveying pipe (2) with a shut-off device (15), which subdivides the conveying pipe (2) into a first portion (2a) between a first end of the conveying pipe (2) and the shut-off device (15) and a second portion (2b) between the shut-off device (15) and the second end of the conveying pipe (2),
(ii) a charging device (1), which is connected to the first end of the conveying pipe (2) by means of the shut-off device (11),
(iii) a discharging device (8), which is connected to the second end of the conveying pipe (2),
(iv) a pressure conveying device (16), which is connected to the first end of the conveying pipe (2) via a shut-off device (12)
(v) a suction conveying device (3), which is connected to the first portion (2a) of the conveying pipe (2) via a shut-off device (10),

for conveying sized glass fibres which have a size extractability of at most 85%.

2. Use according to Claim 1, **characterized in that** the size extractability is at most 50%.

**3.** Use according to Claim 1, **characterized in that** the sized glass fibres are transported in bulk before the pneumatic conveyance.

**4.** Use according to Claim 3, **characterized in that** the bulk transport takes place by means of bulk material containers of at least 1.5 t.


**Revendications**

**1.** Utilisation d'un dispositif de transport pneumatique constitué au moins de :

(i) un tube de transport (2) doté d'un dispositif de fermeture (15) qui divise le tube de transport (2) en un premier tronçon (2a) situé entre une première extrémité de tube de transport (2) et le dispositif de fermeture (15) et un deuxième tronçon (2b) situé entre le dispositif de fermeture (15) et la deuxième extrémité du tube de transport (2),
(ii) un dispositif d'application (1) relié à la première extrémité du tube de transport (2) au moyen de dispositif de fermeture (11),
(iii) un dispositif de sortie (8) relié à la deuxième extrémité du tube de transport (2),
(iv) un dispositif (16) de transport sous pression relié à la première extrémité du tube de transport (2) par l'intermédiaire d'un dispositif de fermeture (12),
(v) un dispositif aspirant de transport (3) relié à la première partie (2a) du tube de transport (2) par l'intermédiaire d'un dispositif de fermeture (10),

pour le transport de fibres de verre enduites dont la capacité d'extraction de l'enduit est d'au plus 85 %.

**2.** Utilisation selon la revendication 1, **caractérisée en ce que** la capacité d'extraction de l'enduit est d'au plus 50 %.

**3.** Utilisation selon la revendication 1, **caractérisée en ce que** les fibres de verre enduites sont transportées en vrac avant le transport pneumatique.

**4.** Utilisation selon la revendication 3, **caractérisée en ce que** le transport en vrac s'effectue avec des récipients de matériau en vrac d'au moins 1,5 t.

Fig. 1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10127427 A1

- EP 0692441 A1
- DE 10127427 A